# NOUVEAU FASCICULE DE BREVET EUROPEEN

(11) **EP 2 262 743 B2**
(45) Date de publication et mention de la décision concernant l'opposition: **10.08.2022**
(45) Mention de la délivrance du brevet: 22.05.2019
(21) Numéro de dépôt: 09721364.9
(22) Date de dépôt: 20.03.2009
(51) Int. Cl.: C03C 17/23, C03C 17/36

(54) **VITRAGE REVÊTU DE COUCHES MINCES**
VERGLASUNG MIT DÜNNSCHICHTBESCHICHTUNG
WINDOW COATED WITH THIN LAYERS

(30) Priorité: 20.03.2008 EP 08102808
(43) Date de publication de la demande: 22.12.2010
(73) Titulaire: AGC Glass Europe, 1348 Louvain-la-Neuve (BE)
(72) Inventeur: DI STEFANO, Gaëtan, B-6040 Jumet (BE)
(74) Mandataire: AGC Glass Europe
(86) Numéro de dépôt international: PCT/EP2009/053288
(87) Numéro de publication internationale: WO 2009/115595

(56) Documents cités:
- EP-A- 0 922 681
- WO-A-02/42234
- WO-A-03/093188
- WO-A-2004/013059
- WO-A2-2007/110552
- DE-B3- 10 333 619
- GB-A- 2 428 251
- US-A- 5 514 485
- US-A1- 2004 241 490

## Description

La présente invention concerne des vitrages comprenant un ensemble de couches minces conférant des propriétés antisolaires ou bas-émissives.

Les revêtements les plus usuels pour les vitrages en question, sont réalisés par des techniques de dépôt sous vide assisté par magnétron, dits "magnetron sputtering".

Les systèmes de couches déposés par ce moyen permettent d'atteindre des performances remarquables tant dans les caractéristiques thermiques que dans les aspects optiques. Ils peuvent présenter notamment une très grande sélectivité, autrement dit constituer de puissants filtres pour les rayons infrarouges, tout en laissant passer les longueurs d'ondes visibles. Ils peuvent dans les meilleures conditions offrir une parfaite neutralité en réflexion, évitant notamment les colorations non-souhaitées.

Au-delà des qualités recherchées, les vitrages en question doivent présenter encore une résistance suffisante aux diverses agressions auxquelles ils sont susceptibles d'être exposés. Il s'agit notamment des agressions chimiques : air, eau, brouillards salins..., mais aussi mécaniques, auxquelles ils sont soumis au cours des transports ou transformations lors de leur mise en oeuvre.

Les vitrages présentant ces propriétés antisolaires et/ou basse-émissives comportent systématiquement un ensemble de couches dites fonctionnelles réfléchissant les infrarouges, et de couches diélectriques qui protègent les premières et minimisent la réflexion des longueurs d'onde du visible.

Parmi les couches de protection, les plus externes doivent notamment conférer à ces systèmes les propriétés de résistance chimique et mécanique dont il a été question plus haut, bien entendu en n'altérant pas les autres propriétés. A titre indicatif, des couches pourtant réputées pour leur résistance mécanique, notamment certains oxydes proposés antérieurement, peuvent être difficiles à produire comme SiO₂. SnO₂ pour sa part ne présente pas une excellente résistance. Les nitrures, qui constituent une autre possibilité pour ces couches superficielles nécessitent des dépôts en atmosphère d'azote, ce qui limite les possibilités de mise en oeuvre. D'autres couches n'offrent pas une transmission lumineuse satisfaisante.

Il est aussi connu d'utiliser de l'oxyde de titane comme couche protectrice, comme c'est par exemple le cas dans WO2004/013059A2. Mais comme le suggère EP922681A1, la fabrication de ce genre de couche est compliquée car elle implique des vitesses de pulvérisation relativement basses. Par ailleurs, EP922681A1 suggère d'utiliser une couche protectrice supérieure en deux parties, comprenant un premier oxyde choisi parmi les oxydes d'étain, de zinc, de titane, de bismuth ou d'aluminium et une couche supérieure ayant une structure de spinelle du type ZnAl₂O₄. Cette couche protectrice offre une bonne résistance aux rayures lors du transport mais ne résout pas tous les problèmes posés.

L'invention propose des couches superficielles pour ces systèmes antisolaires et/ou bas-émissifs, qui offrent un ensemble de propriétés améliorées par rapport à celles des systèmes antérieurs.

L'invention propose de disposer en couche superficielle une couche à base d'oxyde de titane et d'au moins un autre oxyde métallique de dureté élevée, du groupe comprenant : ZrO₂, SiO₂, Cr₂O₃.

Les proportions respectives d'oxyde de titane et des autres métaux peuvent recouvrir une large gamme. Pour que l'effet soit sensible le ou les oxydes additionnels doivent représenter au moins 5% en poids de l'ensemble et de préférence au moins 10% en poids.

Dans l'oxyde mixte, l'oxyde de titane est présent au moins à 40% en poids, et de préférence au moins à 50% en poids.

De manière particulièrement préférée l'oxyde de titane représente au moins 55% en poids.

Dans les oxydes mixtes utilisés selon l'invention en plus de l'oxyde de titane, l'oxyde de zirconium est particulièrement préféré en raison de sa dureté très élevée. Il est avantageusement présent à raison de 15 à 50% en poids de la couche superficielle.

En dehors des oxydes de titane et des métaux énumérés ci-dessus, la couche superficielle selon l'invention contient des oxydes supplémentaires pratiquement indissociables des oxydes précédents. C'est le cas des lanthanides comme l'oxyde d'yttrium ou celui de hafnium. Leur teneur reste relativement limitée et reste inférieure à 5%.

Pour jouer convenablement son rôle la couche superficielle de protection doit présenter une certaine épaisseur. Cependant si cette couche n'est disposée que pour les propriétés mécaniques qu'elle confère au système de couches, une épaisseur relativement modeste peut suffire. L'épaisseur de cette couche n'est pas inférieure à 3 nm.

Compte tenu de ce que les oxydes qui entrent dans la composition de cette couche superficielle sont bien transparents, il est possible d'utiliser des couches beaucoup plus épaisses que ne le nécessiterait l'amélioration de la résistance. Il est possible notamment d'utiliser cette couche de protection comme élément du filtre interférentiel, autrement dit comme couche participant de façon significative au maintient d'une transmission visible élevée et à l'établissement d'une bonne neutralité en réflexion.

La couche superficielle utilisée comme élément du filtre interférentiel est avantageusement combinée à d'autres couches diélectriques. Le choix de l'ensemble tient compte alors non seulement des propriétés optiques ou structurelles des différentes couches (indice, transparence, structure cristalline, qualité des interfaces) mais aussi de la commodité relative de la formation de ces couches.

Quelle que soit la structure considérée, en pratique la couche superficielle selon l'invention reste d'épaisseur au plus égale à 35 nm.

Les couches superficielles selon l'invention qui confèrent notamment de très bonnes propriétés mécaniques sont aussi avantageusement combinées avec des couches offrant une grande résistance aux agents chimiques. Des couches de ce type sont notamment des couches d'oxyde d'étain ou des couches de nitrure de silicium ou d'oxynitrure de silicium Les cathodes de silicium peuvent contenir de l'aluminium comme dopant en faible quantité de l'ordre de 4%, lesquels se retrouvent également dans la couche. Ces couches se situent immédiatement sous la couche superficielle à base d'oxyde de titane, et présentent une épaisseur qui peut également être relativement modeste, de l'ordre de quelques nanomètres. Ces couches et notamment celle d'oxyde d'étain, peuvent aussi, lorsque leur épaisseur est sensiblement plus importante, jouer un rôle optique significatif dans le système interférentiel constitué.

Les vitrages revêtus selon l'invention présentent avantageusement une résistance aux rayures selon la méthode faisant l'objet de la norme ASTM 2486D, qui n'est pas supérieure à 30%, et de préférence pas supérieure à 20% dans une échelle allant de 0 à 100%, 100% correspondant à un vitrage entièrement rayé.

Les vitrages revêtus selon l'invention offrent encore une très bonne résistance aux tests d'humidité. Soumis au test « Cleveland » selon la norme ISO 6270, et pendant 3 jours, le niveau atteint est avantageusement d'au moins 3 sur une échelle allant de 1 à 5, 5 correspondant à un vitrage parfaitement sans défaut. Pour les échantillons soumis au test de pulvérisation saline selon la norme EN 1096 le résultat est avantageusement supérieur à 3 après 2 jours d'exposition.

L'invention est décrite de façon détaillée dans les exemples suivants qui font également l'objet des figures annexées dans lesquelles :
- la figure 1 est une représentation schématique d'une coupe d'un vitrage revêtu d'un système de couches selon l'invention ;
- la figure 2 illustre un autre système de couches comprenant deux couches d'argent ;
- la figure 3 est un graphique représentant l'absorption lumineuse en fonction de la longueur d'onde pour des monocouches d'oxydes utilisés selon l'invention ;
- la figure 4 est analogue à la précédente à une échelle plus détaillée.

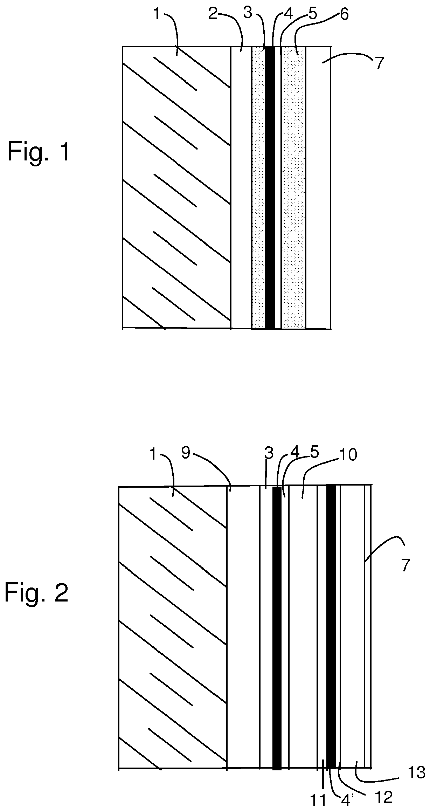

Le vitrage de la figure 1 est présenté en coupe sans respecter les proportions des différents éléments par souci de clarté. La feuille de verre 1 est revêtue d'un ensemble de couches comprenant une couche 4 à base d'argent réfléchissant les infrarouges. Cette couche d'argent est disposée entre deux ensembles de couches diélectriques qui la protègent et lui confèrent une bonne transmission lumineuse avec une bonne neutralité en réflexion.

La couche d'argent 4 est avantageusement déposée sur une couche 3 à base d'oxyde de zinc. Les couches d'oxyde de zinc et celles à base d'oxyde de zinc dopé, sont connues pour favoriser la formation d'une bonne interface avec les couches d'argent, notamment sans rugosité. Elles améliorent globalement les propriétés de ces dernières. Pour une même quantité d'argent par unité de surface la conduction, et par suite l'émissivité des couches, sont améliorées lorsqu'elles sont déposées de cette façon. Il peut s'agir d'oxyde de zinc seul sous faible épaisseur, épaisseur qui n'est pas supérieure à 15nm.

Lorsque l'épaisseur d'oxyde de zinc est plus importante, le risque est de développer une croissance colonnaire laquelle conduit à une interface moins régulière avec une rugosité accrue. Pour éviter ce type de croissance il est connu de doper l'oxyde de zinc avec d'autres oxydes notamment de l'oxyde d'étain.

Les couches constituées d'oxyde mixte zinc et étain sont traditionnellement de deux types. Les couches sur lesquelles les couches d'argent sont déposées sont avantageusement à faible teneur en oxyde d'étain, notamment de l'ordre de 10% en poids. Ces couches comme indiqué précédemment sont relativement peu épaisses et ne dépassent pas 15nm. Le second type de couches d'oxyde mixte de zinc et d'étain est utilisé pour constituer dans les ensembles diélectriques la part principale du chemin optique pour les effets dé-réfléchissants. Dans cette fonction, la ou les couches en question, ont d'ordinaire des épaisseurs de plusieurs dizaines de nanomètres. De façon typique, des couches de ce type sont constituées à partir d'un oxyde mixte à 50% en poids environ de chacun des oxydes de zinc et d'étain

Dans l'exemple représenté à la figure 1, une couche protectrice 5 est déposée au dessus de la couche d'argent 4. Il s'agit d'une couche traditionnelle qui a pour but de protéger la couche d'argent contre les altérations qui pourraient l'affecter au cours des dépôts ultérieurs, notamment lorsque ces dépôts sont réalisés selon un mode réactif par exemple en atmosphère oxydante. La couche 5 est dite "barrière" ou encore "sacrificielle" lorsqu'elle intervient en réagissant avec l'atmosphère qui, en l'absence de cette couche, serait susceptible de réagir avec la couche d'argent.

Ces couches sacrificielles sont de très faibles épaisseurs. Elles ne sont pas de plus de 6 nm et de préférence leur épaisseur est de 2 ou 3 nm. Elles sont constituées traditionnellement à base d'oxyde, notamment de titane ou d'un matériau contenant NiCr, ou du Zr, et des sous oxydes correspondants. Etant déposées pour pouvoir réagir en protégeant l'argent, elles sont souvent formées à partir de cibles des métaux correspondant, et oxydées dans la suite de la constitution de l'empilage. Pour cette raison les couches sont souvent sous-stoechiométriques. Il est aussi possible de les déposer à partir de cibles céramiques elles mêmes sous-stoechiométriques. Cette façon de procéder permet d'atteindre plus commodément dans la couche finale une bonne oxydation voisine de la stoechiométrie. De cette manière le coefficient d'extinction de la couche est réduit au mieux.

A la figure 1 les couches 2 et 6, sont des couches entrant dans la constitution du filtre. Elles permettent d'éviter la réflexion de la majeure partie des rayons du domaine du visible. Grâce à ces couches on règle aussi la coloration de la lumière transmise et surtout de celle réfléchie, étant connu que dans la grande majorité des applications l'on s'efforce pour cette dernière de faire en sorte que cette lumière soit aussi faible et aussi neutre que possible.

Les couches diélectriques traditionnelles sont principalement constituées des oxydes de : Zn, Sn, Ti, Al, Zr, Nb. Leur épaisseur est fonction de leur indice et des chemins optiques requis, eux-mêmes dépendant de l'épaisseur de la couche réfléchissant les infrarouges. Les relations entre ces grandeurs sont parfaitement établies et donnent lieu le plus souvent à des déterminations au moyen de programmes spécialisés. Partant des valeurs ainsi déterminées, les ajustements ultérieurs sont effectués pour tenir compte des écarts qui peuvent exister entre les caractéristiques effectives de structure, de composition ou de configuration, et celles correspondantes des couches idéales.

La couche superficielle 7 est une couche selon l'invention à base d'oxyde de titane comprenant un oxyde de dureté élevée (ZrO₂, SiO₂, Cr_{é}O₃,).

A titre d'exemple d'un empilage de ce type conforme à l'invention, les échantillons suivants sont réalisés. Les épaisseurs sont exprimées en Angströms :

| | TiZrOx | ZSO9 | Ag | TiOx | ZSO9 | TiZrOx |
|---|---|---|---|---|---|---|
| Ex.1 | 180 | 60 | 120 | 20 | 210 | 160 |
| Ex.2 | 180 | 60 | 120 | 30 | 210 | 160 |

Dans ce tableau :
- ZSO₉ désigne une couche d'oxyde de zinc dopée à 10% en poids d'oxyde d'étain ;
- TiOx est un oxyde de titane sous-oxydé (éventuellement TiOx peut être remplacé par ZrOx est un oxyde de zirconium sous-oxydé) ;
- TiZrOx est un oxyde de titane mixte comprenant en poids 50% de TiO₂, 46% de ZrO₂, le reste étant constitué d'éléments accompagnant habituellement le zirconium, notamment de l'oxyde Y₂O₅; il est obtenu à partir de cibles céramiques et déposé en atmosphère légèrement oxydante, la couche obtenue est pratiquement stoechiométrique ;

L'exemple de comparaison, analogue aux exemples précédents mais ne comportant pas de couche superficielle selon l'invention, est le suivant :

| | TiO₂ | ZnO | Ag | TiOx | ZnO | SnO₂ |
|---|---|---|---|---|---|---|
| Ex. com.1 | 200 | 60 | 125 | 30 | 250 | 200 |

TiO₂ est une couche déposée dans des conditions qui favorisent la formation d'un composé quasi stoechimétrique par opposition aux couches barrières TiOx qui en raison de leur fonction sont déposées en gardant une certaine sous-stoechiométrie qui s'atténue ou disparait au cours des dépôts des couches ultérieures.

Tous ces exemples correspondent a des systèmes à basse émissivité de vitrages "non-trempables". Soumis à un traitement thermique vigoureux du type bombage/trempe, leurs qualités optiques sont susceptibles de se modifier de manière significative.

Les échantillons sont testés pour leur capacité de résister aux épreuves mécaniques. Dans les conditions de l'essai il est peu important que des différences soient relevées dans la constitution des couches sous-jacentes. Les résultats dépendent essentiellement de la qualité de la couche superficielle.

Les échantillons sont soumis à un essai avec une brosse sèche selon la norme ASTM 2486D. On mesure le taux de rayures. Plus celui-ci est faible meilleure est la résistance mécanique. L'échantillon comportant la couche superficielle de SnO₂ présente un taux de rayures de 40%. Les échantillons 1 et 2 selon l'invention présentent respectivement des taux de 5% et 15%. Leur résistance est donc améliorée de façon très significative.

Des essais analogues sont réalisés sur des systèmes constitués de la façon suivante (épaisseurs en Angströms) :

| | TiO₂ | ZnO | Ag | TiOx | ZnO | SnO₂ | TiZrOx |
|---|---|---|---|---|---|---|---|
| Ex com.A | 200 | 50 | 120 | 30 | 200 | 250 | |
| Ex. B | 200 | 50 | 120 | 30 | 200 | 250 | 31 |
| Ex. C | 200 | 50 | 120 | 30 | 200 | 250 | 63 |

Pour ces échantillons les propriétés optiques dans le système CIELAB et la résistance s'établissent de la façon suivante :

**Transmission lumineuse**

| | Y(D65,2°) | L*(D65,10°) | a*(D65,10°) | b*(D65,10°) |
|---|---|---|---|---|
| Ex com.A | 86,14 | 94,27 | - 1,81 | 3,88 |
| Ex. B | 86,87 | 94,6 | - 2,03 | 3,39 |
| Ex. C | 86,19 | 94,3 | - 1,85 | 3,49 |

**Réflexion lumineuse**

| | Y(D65,2°) | L*(D65,10°) | a*(D65,10°) | b*(D65,10°) |
|---|---|---|---|---|
| Ex com A | 27,8 | 0,15 | - 10,44 | 19,68 |
| Ex. B | 27,8 | 0,3 | -8,44 | 4,89 |
| Ex. C | 28,38 | 0 | - 9,65 | 5,46 |

Les résistances par carré respectives de ces trois échantillons s'établissent à 3,65, 3,44 et 3,51Ω/□.

Les qualités optiques et de résistance ne sont pas sensiblement modifiées par la présence de la couche protectrice selon l'invention. La résistance à l'abrasion mesurée selon la norme ASTM4086D est d'autant meilleure que la couche protectrice est plus épaisse. Il en est de même dans la mesure de la résistance à la délamination dans l'épreuve de frottement humide ("wet rub test").

Le "wet rub test" est destiné à apprécier la résistance du système de couches à la délamination au frottement. L'échantillon est soumis au frottement d'un tissu de coton maintenu humide (eau déminéralisée) sous une charge. Le frottement en va-et-vient est effectué à une fréquence de 60 oscillations par minutes. Le mouvement est maintenu pendant un nombre de cycles usuellement de 500.

On observe l'évolution de la couche supérieure et si celle-ci est enlevée par ce frottement.

La résistance aux épreuves dites chimiques montre également une amélioration en fonction de l'épaisseur de la couche protectrice. Trois types d'essais sont réalisés. Le test dit de Cleveland, la chambre climatique et le brouillard salin. La nature de ces essais est détaillée plus loin à propos des essais effectués sur des échantillons comprenant deux couches d'argent. L'échantillon ayant la couche protectrice la plus épaisse montre encore une fois la meilleure résistance à ces trois tests. Les valeurs respectives s'établissent ainsi à 4,5 au Cleveland, 4,5 à la chambre climatique te 3,5 au brouillard salin.

D'autres essais sont conduits avec des systèmes de couches comprenant deux couches d'argent. De nouveau des essais comparatifs sont effectués. Les échantillons de comparaison comportent une couche superficielle d'oxyde d'étain. Les échantillons selon l'invention sont revêtus par une couche d'oxyde mixte de titane et de zirconium comme précédemment.

Dans une première comparaison les structures sont les suivantes (comme précédemment les épaisseurs sont exprimées en Angströms) :

| couche | 9 | 3 | 4 | 5 | 10 | 11 | 4' | 12 | 13 | 7 |
|---|---|---|---|---|---|---|---|---|---|---|
| Ex.com.2 | TiO₂ | ZnO | Ag | TiOx | TiO₂ | ZnO | Ag | TiZrOx | ZnO-Al | SnO₂ |
| | 230 | 60 | 95 | 30 | 610 | 60 | 135 | 30 | 120 | 180 |
| Ex. 3 | TiO₂ | ZnO | Ag | TiOx | TiO₂ | ZnO | Ag | TiZrOx | ZnO-Al | TiZrOx |
| | 230 | 60 | 95 | 30 | 610 | 60 | 135 | 30 | 90 | 150 |
| Ex.com.3 | TiZrOx | ZnO-Al | Ag | TiOx | TiO₂ | ZnO-Al | Ag | TiOx | ZnO | SnO₂ |
| | 230 | 60 | 95 | 30 | 610 | 30 | 135 | 30 | 100 | 160 |
| Ex. 6 | TiZrOx | ZnO-Al | Ag | TiOx | TiO₂ | ZnO-Al | Ag | TiOx | ZnO-Al | TiZrOx |
| | 230 | 60 | 95 | 30 | 610 | 30 | 135 | 30 | 100 | 160 |

Dans ce tableau les abréviations ont les mêmes significations que précédemment. En plus ZnO-Al désigne un oxyde de zinc dopé à l'aluminium, comportant 5% en poids d'aluminium.

La structure est celle schématisée à la figure 2 qu'il s'agisse des échantillons de comparaison comme ceux de l'invention.

Les échantillons précédents ont été soumis à une série de tests de résistance.

Le premier essai concerne la résistance à la condensation suivant la méthode dite « Cleveland » qui fait l'objet de la norme ISO 6270. Selon ce test les échantillons sont maintenus dans une atmosphère saturée d'humidité à température constante pendant plusieurs jours. On note l'apparition éventuelle de défauts et leur densité. Le test est considéré comme réussi lorsque le niveau atteint après 1 jour est de 4 sur une échelle allant de 1 à 5, la note 5 correspondant à un échantillon sans défaut.

Un essai est effectué aussi en chambre climatique. Il s'agit également d'un essai de résistance à la condensation. Dans ce test la température passe de 45 à 55°C alternativement chaque fois pendant 1 heure. L'atmosphère est aussi saturée en humidité. Comme précédemment le résultat est bon lorsque le niveau après 3 jours est au moins de 3 sur l'échelle de 1 à 5.

Le test de la pulvérisation saline est effectué selon la norme EN1096. L'échantillon dans ce cas est satisfaisant lorsque le niveau est au moins de 2,5 après 2 jours toujours sur l'échelle de 1 à 5.

La résistance aux UV est déterminée par exposition de manière accélérée. Le niveau est satisfaisant s'il est d'au moins 3.

Les résultats obtenus sont reportés dans le tableau suivant :

| | Cleveland 3j. | Ch. clim 3j. | Spray 2j. | UV |
|---|---|---|---|---|
| Com. 4 | 2,5 | 3 | 4 | 1 |
| Exemple 5 | 4 | 4,5 | 3,75 | 3 |
| Com. 5 | 1,5 | 3,5 | 4 | 3,25 |
| Exemple 6 | 3,75 | 3,5 | 4 | 3,75 |

Par rapport aux échantillons de référence les structures selon l'invention se comportent au moins aussi bien, et sont particulièrement résistantes aux tests de résistances à l'humidité.

D'autres essais sont effectués avec des couches superficielles à base d'oxyde mixte de titane et soit de silicium (TiSiO). Le taux d'oxyde de silicium est de 8% en poids. Le dépôt de ces couches est effectué soit dans un gaz neutre (Ar) soit dans un mélange de gaz neutre et d'oxygène comportant 7% d'oxygène. Ces structures sont encore essayées à différentes épaisseurs pour la couche superficielle (30, 80 et 130Å).

La structure des systèmes de couches est analogue à celle des exemples précédents 1 et 2.

| | TiO₂ | ZSO9 | Ag | TiOx | ZSO9 | TiSiO |
|---|---|---|---|---|---|---|
| | 180 | 60 | 120 | 20 | 210 | |

Les combinaisons suivantes sont réalisées et les propriétés indiquées pour la résistance aux rayures à la brosse sèche, et au test chimique de type "Cleveland".

Tous les essais "Cleveland" montrent une très bonne résistance des échantillons selon l'invention. Les notations se situent toutes à 4 ou plus sur l'échelle de 1 à 5. La résistance à la brosse montre les résultats suivants en pourcentage de rayures :

| | O₂ % | Epaisseur Å | résistance |
|---|---|---|---|
| TiSiO (8% Si) | 0 | 30 | |
| | | 80 | 90 |
| | | 130 | 90 |
| | 7 | 30 | 30 |
| | | 80 | 20 |
| | | 130 | 10 |

Les résistances à l'abrasion montrent une progression manifeste pour les couches déposées en atmosphère contenant de l'oxygène. Cette résistance à la rayure dépend aussi, de manière un peu moindre, de l'épaisseur de la couche.

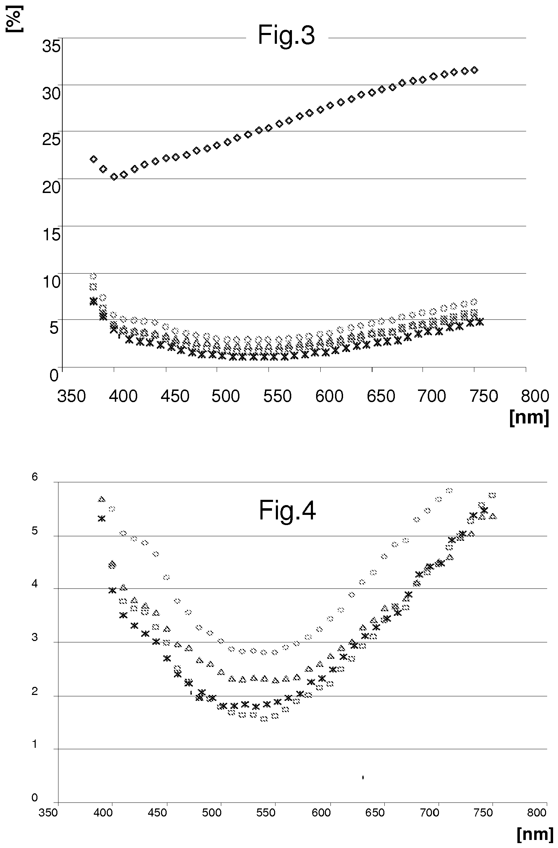

Les couches utilisées selon l'invention comme couche superficielle protectrice ont encore l'avantage par rapport à d'autres types de couches présentant des qualités de résistance mécanique, par exemple de nitrure de titane, d'être très transparentes aux longueurs d'onde visibles. Cette transparence est d'autant meilleure que l'oxydation de la couche est plus complète. Les figures 3 et 4 illustrent cette particularité.

Sur ces figures des séries de mesures d'absorption sont rapportées en fonction de la longueur d'onde. Les mesures sont faites sur des monocouches d'oxyde mixte de titane et de zirconium du même type que celles faisant l'objet des exemples précédents. Les couches sont déposées sur une feuille de verre clair de 4mm d'épaisseur.

La couche de TiZrOx est uniformément de 16 nm. Elle est déposée dans une atmosphère d'argon dont la teneur en oxygène est variable, sous une pression totale constante de 0,8 Pa.

Les dépôts sont effectués à partir d'une cible céramique comportant le mélange d'oxyde de titane et zirconium. Le débit d'oxygène est successivement nul (losange), puis de 1 (rond), 2,5 (triangle), et 5 cm³ (carré) par Kw de puissance appliquée à la cathode. La cinquième mesure (étoile) correspond au dernier échantillon (5 cm³) ayant été soumis au traitement thermique 600°C pendant 3 mn.

Dans l'atmosphère d'argon seul, l'absorption de la couche, figure 3, est très importante. Cette absorption correspond à l'existence de sous-stoechiométrie inhérente à la formation dans ce type d'atmosphère. Dès qu'un peu d'oxygène est introduit, l'aptitude du titane à réagir conduit rapidement à un comportement radicalement différent. L'absorption est réduite sensiblement. Le mélange d'oxyde tend vers la stoechiométrie.

A la figure 3 les différentes courbes sont très rapprochées. Pour distinguer les effets de la teneur en oxygène les résultats sont reportés à une autre échelle à la figure 4. On constate sur cette figure que l'absorption est globalement plus faible lorsque la teneur en oxygène est augmentée. On atteint cependant rapidement une limite. La courbe qui est présentée pour l'échantillon qui a subi un traitement thermique est pratiquement identique à celle de l'échantillon avant ce traitement. La couche est donc pratiquement stoechiométrique pour ces concentrations.

Les couches protectrices superficielles selon l'invention sont avantageusement utilisées pour protéger des systèmes bas émissifs comprenant une, deux ou trois couches d'argent, chaque couche d'argent présentant une épaisseur comprise entre 7 et 20 nm. Ces systèmes comprennent aussi des couches diélectriques notamment à base d'oxyde de zinc, d'oxyde d'étain et de leurs alliages. Ces systèmes comprennent en outre des couches barrières situées au-dessus des couches d'argent et constituées de titane ou de NiCr, de Zr, et de leurs oxydes ou sous oxydes.

Des vitrages selon l'invention utiles comme vitrages bas émissifs comprennent notamment la structure suivante partant de la feuille de verre :
ZnSnO(50/50)/ZnSnO(90/10)/Ag/TiOx/ZnSnO(90/10)/ZnSnO(50 /50)/TiZrOx(55/45)

Dans cette structure la couche à base d'argent présente une épaisseur comprise entre 10 et 14nm, les diélectriques situés sous la couche d'argent respectivement les épaisseurs de 20 à 35nm et 6 à 10nm, et pour les couches diélectriques à base d'oxyde de zinc situées au dessus de l'argent des épaisseurs respectives de 15 à 25nm et 15 à 25nm, l'épaisseur de la couche superficielle de TiZrOx étant comprise entre 5 et 8nm.

Un système de couches analogue est proposé selon l'invention qui comporte cette fois deux couches réfléchissantes à base d'argent. La structure de ce système est à partir du substrat verrier :
ZnSnO(50/50)/ZnSnO(90/10)/Ag/TiOx/ZnSnO(50/50)/ ZnSnO(90/10)/Ag/TiOx/ZnSnO(90/10)/ZnSnO(50/50)/TiZrOx(55 /45)
avec pour chaque ensemble de couches diélectriques, des épaisseurs telles que sous la première couche d'argent 20 à 35nm et 6 à 10 nm, entre les couches d'argent pour les couches à base d'oxyde de zinc respectivement de 8 à 20 nm, de 40 à 70nm et de 8 à 20nm, et celle au dessus de la seconde couche d'argent de 6 à 10nm et de 20 à 35nm, les couches d'argent ayant chacune une épaisseur comprise entre 10 et 14nm, et l'épaisseur de la couche superficielle de TiZrOx étant comprise entre 5 et 8nm.

Sur la base de cette structure on compare un ensemble comprenant la couche supérieure de protection selon l'invention à une structure analogue sans cette couche. Les épaisseurs respectives des différentes couches sont :
Exemple comparatif
   268/110/118/21/685/160/166/23/140/107/105
Selon l'invention
   218/160/118/21/685/160/166/23/120/77/105/31

Les échantillons sont soumis aux essais :

| | Brosse | Cleveland | Ch. clim 3j | Spray 2j | UV |
|---|---|---|---|---|---|
| comparatif | 75% | 2 | 3 | 4 | 4,5 |
| invention | 1% | 4 | 4,5 | 4 | 4,5 |

La structure selon l'invention montre une très bonne résistance à l'abrasion et aux épreuves en conditions humides.

## Revendications

1. Vitrage essentiellement transparent comportant un système de couches minces déposées sous vide avec magnétron et présentant des propriétés antisolaires et/ou bas-émissives comprenant une , deux ou trois couches d'argent, chaque couche présentant une épaisseur comprise entre 7 et 20 nm, et des couches barrières situées au-dessus des couches d'argent constituées de titane, de NiCr, de Zr et de leurs oxydes et sous-oxydes, comportant comme couche superficielle protectrice une couche à base d'oxyde de titane et d'au moins un autre oxyde métallique de dureté élevée du groupe comprenant : ZrO₂, SiO₂, Cr₂O₃ et dans lequel la couche superficielle à base d'oxyde de titane qui contient encore des oxydes de lanthanides, d'hafnium ou d'yttrium présents habituellement avec les oxydes additionnels considérés, ces oxydes se trouvant en proportion ne dépassant pas 5% en poids de l'ensemble des oxydes de la couche superficielle, ladite couche superficielle présente une épaisseur qui n'est pas inférieure à 3 nm et est appliquée soit sur une première couche protectrice d'oxyde d'étain ou de nitrure de silicium, soit sur une couche d'alliage d'oxyde de zinc et d'oxyde d'étain.

2. Vitrage selon la revendication 1 dans lequel le ou les oxydes métalliques hors l'oxyde de titane de la couche superficielle, représentent au moins 5% en poids de l'ensemble de la couche, et de préférence au moins 10% en poids.

3. Vitrage selon l'une des revendications précédentes dans lequel l'oxyde de titane représente au moins 40% en poids de la couche superficielle.

4. Vitrage selon l'une des revendications précédentes dans lequel, hors l'oxyde de titane, la couche superficielle contient de l'oxyde de zirconium à raison de 15 à 50% en poids.

5. Vitrage selon l'une des revendications 1 à 4 dans lequel la couche superficielle à base d'oxyde de titane présente une épaisseur qui n'est pas supérieure 35nm.

6. Vitrage selon l'une des revendications précédentes comprenant au moins une couche fonctionnelle à base d'argent et un ensemble de couches diélectriques disposées entre le substrat verrier et la première couche d'argent, le cas échéant entre chaque couche d'argent, et au-dessus de la couche d'argent la plus distante du substrat.

7. Vitrage selon la revendication 6, dans lequel la ou les couches d'argent sont déposées sur une couche à base d'oxyde de zinc éventuellement dopée à l'étain.

8. Procédé de préparation d'un vitrage selon l'une des revendications précédentes dans lequel la couche superficielle à base d'oxyde de titane comprenant un ou plusieurs oxydes additionnels améliorant sa résistance mécanique, est déposée par dépôt sous vide assisté par magnétron, à partir de cathodes comportant un mélange correspondant d'oxydes.

9. Procédé selon la revendication 8 dans lequel le dépôt de la couche superficielle est effectué en atmosphère légèrement oxydante.

## Patentansprüche

1. Im Wesentlichen transparente Verglasung, umfassend ein System dünner Beschichtungen, die durch Vakuum-Magnetronabscheidung aufgebracht werden und Sonnenschutz- und/oder Niederemissionseigenschaften aufweisen, umfassend eine, zwei oder drei Silberschichten, wobei jede Schicht eine Dicke zwischen 7 und 20 nm aufweist, und Sperrschichten, die über den Silberschichten angeordnet sind und aus Titan, NiCr, Zr und ihren Oxiden und Suboxiden bestehen, umfassend als Oberflächenschutzschicht eine Schicht auf der Basis von Titanoxid und mindestens einem anderen Metalloxid mit hoher Härte der Gruppe umfassend: ZrO₂, SiO₂, Cr₂O₃, und wobei die Oberflächenschicht auf der Basis von Titanoxid auch Lanthanid-, Hafnium- oder Yttriumoxide enthält, die üblicherweise mit den betreffenden zusätzlichen Oxiden vorhanden sind, wobei diese Oxide einen Anteil aufweisen, der 5 Gew.-% der Gesamtheit der Oxide der Oberflächenschicht nicht überschreitet, wobei die Oberflächenschicht eine Dicke aufweist, die nicht kleiner ist als 3 nm und entweder auf einer ersten Schutzschicht aus Zinnoxid oder aus Siliciumnitrid oder auf einer Schicht einer Legierung von Zinkoxid und Zinnoxid aufgebracht ist.

2. Verglasung nach Anspruch 1, wobei das oder die Metalloxide außer Titanoxid der Oberflächenschicht mindestens 5 Gew.-% der Gesamtheit der Schicht und vorzugsweise mindestens 10 Gew.-% ausmachen.

3. Verglasung nach einem der vorhergehenden Ansprüche, wobei das Titanoxid mindestens 40 Gew.-% der Oberflächenschicht ausmacht.

4. Verglasung nach einem der vorhergehenden Ansprüche, wobei, außer dem Titanoxid, die Oberflächenschicht Zirkoniumoxid in einer Menge von 15 bis 50 Gew.-% enthält.

5. Verglasung nach einem der Ansprüche 1 bis 4, wobei die Oberflächenschicht auf der Basis von Titanoxid eine Dicke aufweist, die nicht größer ist als 35 nm.

6. Verglasung nach einem der vorhergehenden Ansprüche, umfassend mindestens eine funktionelle Schicht auf der Basis von Silber und eine Einheit dielektrischer Schichten, die zwischen dem Glassubstrat und der ersten Silberschicht, gegebenenfalls zwischen jeder Silberschicht und über der Silberschicht, die von dem Substrat am weitesten entfernt ist, angeordnet sind.

7. Verglasung nach Anspruch 6, wobei die Silberschicht oder Silberschichten auf einer Schicht auf der Basis von Zinkoxid, gegebenenfalls dotiert mit Zinn, angeordnet sind.

8. Verfahren zur Herstellung einer Verglasung nach einem der vorhergehenden Ansprüche, wobei die Oberflächenschicht auf der Basis von Titanoxid, umfassend ein oder mehrere zusätzliche Oxide, die ihre mechanische Festigkeit verbessern, durch Vakuum-Magnetronabscheidung mit Kathoden, umfassend eine entsprechende Mischung von Oxiden, abgeschieden wird.

9. Verfahren nach Anspruch 8, wobei die Abscheidung der Oberflächenschicht in einer leicht oxidierenden Atmosphäre durchgeführt wird.

## Claims

1. Essentially transparent glazing including a system of magnetron vacuum-deposited thin layers having antisolar and/or low-emissivity properties, comprising one, two or three silver layers, each layer having a thickness of between 7 and 20 nm, and barrier layers located over the silver layers, constituted of titanium, NiCr, Zr and oxides and suboxides thereof, including as protective surface layer a layer based on titanium oxide and on at least one other metal oxide of high hardness from the group comprising: ZrO₂, SiO₂, Cr₂O₃, and in which the surface layer based on titanium oxide which still contains lanthanide, hafnium or yttrium oxides usually present with the additional oxides under consideration, these oxides being in a proportion not exceeding 5% by weight of all of the oxides of the surface layer, said surface layer has a thickness which is not less than 3 nm and is applied either onto a first protective layer of tin oxide or silicon nitride, or onto an alloy layer of zinc oxide and tin oxide.

2. Glazing according to Claim 1, in which the metal oxide(s), besides the titanium oxide of the surface layer, represent at least 5% by weight of the whole layer, and preferably at least 10% by weight.

3. Glazing according to either of the preceding claims, in which titanium oxide represents at least 40% by weight of the surface layer.

4. Glazing according to one of the preceding claims, in which, besides titanium oxide, the surface layer contains zirconium oxide in a proportion of from 15% to 50% by weight.

5. Glazing according to one of Claims 1 to 4, in which the surface layer based on titanium oxide has a thickness which is not greater than 35 nm.

6. Glazing according to one of the preceding claims, comprising at least one functional layer based on silver and a set of dielectric layers placed between the glass substrate and the first silver layer, where appropriate between each silver layer, and over the silver layer that is the most remote from the substrate.

7. Glazing according to Claim 6, in which the silver layer (s) are deposited on a layer based on zinc oxide which is optionally tin-doped.

8. Process for preparing a glazing according to one of the preceding claims, in which the surface layer based on titanium oxide comprising one or more additional oxides which improve its mechanical strength is deposited by magnetron-assisted vacuum deposition, from cathodes including a corresponding oxide mixture.

9. Process according to Claim 8, in which the deposition of the surface layer is performed under a slightly oxidative atmosphere.
